# EUROPEAN PATENT APPLICATION

(11) **EP 4 400 534 A1**
(43) Date of publication of application: **17.07.2024**
(21) Application number: 22875137.6
(22) Date of filing: 30.09.2022
(51) Int. Cl.: C08G 73/00, C25D 5/02, C08G 59/00

(54) **POLYMER, LEVELER AND PREPARATION METHOD THEREFOR, ELECTROPLATING SOLUTION AND ELECTROPLATING METHOD**

(30) Priority: 30.09.2021 CN 202111168841
(71) Applicant: Huawei Technologies Co., Ltd., Shenzhen, Guangdong 518129 (CN)
(72) Inventor: ZHENG, Li, Shenzhen, Guangdong 518129 (CN); LUO, Jiye, Guangzhou, Guangdong 510006 (CN); TAN, Baizhao, Guangzhou, Guangdong 510006 (CN)
(74) Representative: Thun, Clemens
(86) International application number: PCT/CN2022/123097
(87) International publication number: WO 2023/051756

(57) **Abstract**

This application discloses a polymer, a leveling agent, and preparation methods thereof, an electroplating solution, and an electroplating method, and pertains to the field of electroplating technologies. The polymer includes a plurality of repeating units, and the repeating unit includes: a binary epoxy compound residual group and a nitrogen-containing group. The binary epoxy compound residual group is a residue formed after an epoxy bond of a binary epoxy compound is ring-opened. The nitrogen-containing group includes: an alkyl group, and a dimethylamine group and a nitrogen-containing heterocyclic group that are respectively connected to two ends of the alkyl group, where the dimethylamine group is further connected to the binary epoxy compound residual group through a single bond. The polymer is conducive to obtaining a high-coplanarity plating at a high current density, and is especially suitable for being used as a leveling agent in an electroplating solution.

## Description

This disclosure claims priority to Chinese Patent Application No. 202111168841.X, filed on September 30, 2021 and entitled "POLYMER, LEVELING AGENT AND PREPARATION METHOD THEREOF, ELECTROPLATING SOLUTION, AND ELECTROPLATING METHOD", which is incorporated herein by reference in its entirety.

### TECHNICAL FIELD

This disclosure relates to the field of electroplating technologies, and in particular, to a polymer, a leveling agent, and preparation methods thereof, an electroplating solution, and an electroplating method.

### BACKGROUND

In a process of manufacturing an integrated circuit, an electroplating process is usually used to form an electrical interconnection line. For example, electroplating is performed in an electroplating solution by using copper as an anode and a silicon wafer as a cathode, so that copper is deposited on the silicon wafer to form a copper pillar. The copper pillar is the electrical interconnection line. To avoid an electrical connection failure, the copper pillar on the silicon wafer needs to have high coplanarity.

In the conventional technology, a leveling agent is added into the electroplating solution to improve copper pillar coplanarity. For example, a chemical structural formula of the leveling agent is shown as follows: 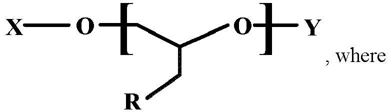 X is hydrogen, an alkyl group, monool, diol, triol, or a polyol group, Y is hydrogen, an alkyl group, monool, diol, triol, or a polyol group, and R is a nitrogen-containing atomic group.

However, the leveling agent is not suitable for being used at a high current density. When electroplating is performed by using an electroplating solution including the leveling agent, an increasing current density indicates decreasing copper pillar coplanarity.

### SUMMARY

In view of this, this disclosure provides a polymer, a leveling agent, and preparation methods thereof, an electroplating solution, and an electroplating method, to resolve the foregoing technical problem.

Specifically, the following technical solutions are included.

In one aspect, a polymer is provided. The polymer includes a plurality of repeating units, and the repeating unit includes: a binary epoxy compound residual group and a nitrogen-containing group.

The binary epoxy compound residual group is a residue formed after an epoxy bond of a binary epoxy compound is ring-opened.

The nitrogen-containing group includes: an alkyl group, and a dimethylamine group and a nitrogen-containing heterocyclic group that are respectively connected to two ends of the alkyl group, where the dimethylamine group is further connected to the binary epoxy compound residual group through a single bond.

In the polymer provided in this embodiment of this disclosure, the binary epoxy compound residual group and the nitrogen-containing group are combined to form the repeating unit. Both the dimethylamine group and the nitrogen-containing heterocyclic group of the nitrogen-containing group include N atoms. Therefore, both the dimethylamine group and the nitrogen-containing heterocyclic group are strongly electropositive functional groups, and have strong electropositivity. When the polymer is used in an electroplating process, the N atoms in the nitrogen-containing group of the polymer can be characteristically adsorbed in a high current density area on a to-be-plated cathode part, to compete with anodic ions. In this way, the polymer inhibits metal deposition in the high current density area through steric hindrance, to slow down an electroplating speed in the high current density area. Further, when the nitrogen-containing group is used, the nitrogen-containing group is used in combination with the binary epoxy compound residual group. In an area with higher convection intensity, the polymer has stronger adsorption on the to-be-plated cathode part, and in an area with lower convection intensity, the polymer has weaker absorption on the to-be-plated cathode part. In addition, the polymer can adaptively adjust the adsorption of the polymer on the to-be-plated cathode part based on a value of a current density, provide strong metal deposition inhibition in an area with a high current density, and provide weak metal deposition inhibition in an area with a low current density.

The polymer provided in this embodiment of this disclosure facilitates obtaining a highly uniform plating, and is particularly applicable for obtaining a high-coplanarity plating at a high current density. This is of positive significance for improving plating coplanarity while increasing a plating rate at the high current density, so that the polymer in this embodiment of this disclosure is particularly applicable for being used as a leveling agent in the electroplating solution.

In some possible implementations, a quantity of carbon atoms of the alkyl group ranges from 1 to 5, for example, 1, 2, 3, 4, and 5. The quantity of carbon atoms of the alkyl group falls within the foregoing range, so that the polymer has a proper molecular weight, and the polymer can obtain a better adsorption capability on the to-be-plated cathode part.

In some possible implementations, the nitrogen-containing heterocyclic group is a morpholine group or a pyrrole group. Both the morpholine group and the pyrrole group are strongly electropositive groups, thereby helping the polymer to be adsorbed in the high current density area.

In some possible implementations, a chemical structural formula of the nitrogen-containing group includes: 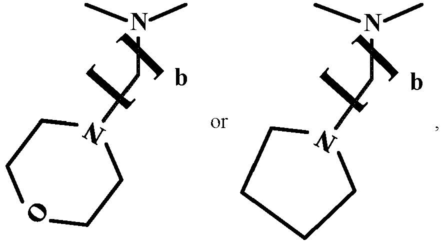 where
b is an integer, and 1 ≤ b ≤ 5.

In some possible implementations, the binary epoxy compound residual group includes: a non-epoxy connection group, and two epoxy residues respectively connected to two ends of the non-epoxy connection group.

The epoxy residue is a residue formed after an epoxy bond is ring-opened, and the epoxy residue is connected to the dimethylamine group.

In some possible implementations, a chemical structural formula of the binary epoxy compound residual group is one of the following chemical structural formulas: 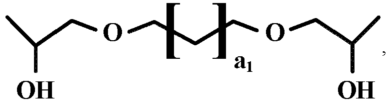 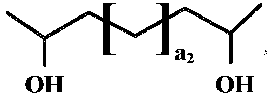 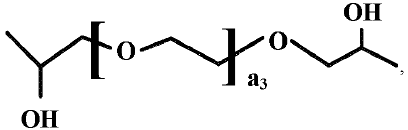 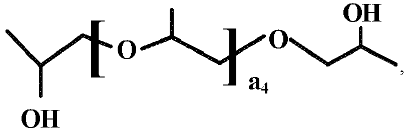 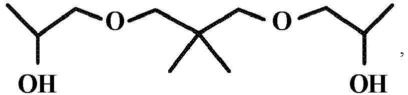 or 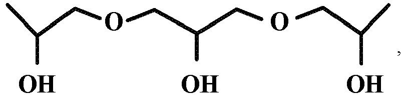 where
a₁, a₂, a₃, and a₄ are all integers, and each is an integer ranging from 0 to 8.

In some possible implementations, a quantity of repeating units ranges from 3 to 100, so that the polymer has a proper molecular weight, and the polymer can obtain a better adsorption capability on the to-be-plated cathode part.

In some possible implementations, a chemical structural formula of the polymer is shown as follows: 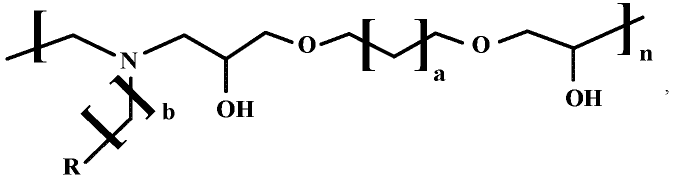 where 0 ≤ a ≤ 8, 1 ≤ b ≤ 5, 3 ≤ n ≤ 100, and a, b, and n are all integers; and

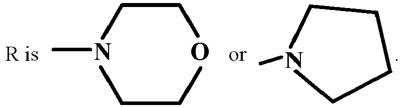

The polymer having the foregoing chemical structural formula is particularly conducive to obtaining a highly uniform plating, and is applicable for obtaining a high-coplanarity plating at a high current density. In other words, when the polymer having the foregoing chemical structural formula is used in the electroplating solution, a contradiction between electroplating production efficiency and plating coplanarity can be effectively resolved. On a premise that the plating coplanarity is not lost, an electroplating rate can be significantly improved.

In another aspect, a polymer preparation method is provided, where a polymer includes a plurality of repeating units. The repeating unit includes: a binary epoxy compound residual group and a nitrogen-containing group. The nitrogen-containing group includes: an alkyl group, and a dimethylamine group and a nitrogen-containing heterocyclic group that are respectively connected to two ends of the alkyl group, where the dimethylamine group is further connected to the binary epoxy compound residual group through a single bond.

The polymer preparation method includes: performing a polymerization reaction on a binary epoxy compound and a nitrogen-containing compound in a solvent to obtain the polymer.

A residue formed after an epoxy bond of the binary epoxy compound is ring-opened is used as the binary epoxy compound residual group.

The nitrogen-containing compound includes: an alkyl group, and an amine group and a nitrogen-containing heterocyclic group that are respectively connected to two ends of the alkyl group, where a residue formed after the amine group of the nitrogen-containing compound participates in the polymerization reaction is used as the nitrogen-containing group.

Two epoxy groups at two ends of the binary epoxy compound and the amine group in the nitrogen-containing compound participate in the polymerization reaction, and the epoxy group in the binary epoxy compound can be polymerized with active hydrogen on the amine group in the nitrogen compound. During the reaction, the epoxy group is ring-opened to generate a hydroxyl group and a methylene group, and the amine group forms the dimethylamine group. The dimethylamine group is used as a nucleophile, and is connected to the methylene group. In other words, the epoxy group in the binary epoxy compound forms the hydroxyl group and the methylene group in the binary epoxy compound residual group after the polymerization reaction, and the amino group in the nitrogen-containing compound forms the dimethylamine group in the nitrogen-containing group after the polymerization reaction. The dimethylamine group and the methylene group are connected through a single bond, and further, a connection between the nitrogen-containing group and the binary epoxy compound residual group is implemented, to obtain the polymer shown in this embodiment of this disclosure.

In some possible implementations, a quantity of carbon atoms of the alkyl group ranges from 1 to 5. The quantity of carbon atoms of the alkyl group falls within the foregoing range, so that the polymer has a proper molecular weight, and the polymer can obtain a better adsorption capability on the to-be-plated cathode part.

In some possible implementations, the nitrogen-containing heterocyclic group is a morpholine group or a pyrrole group.

In some possible implementations, a chemical structural formula of the nitrogen-containing compound includes: 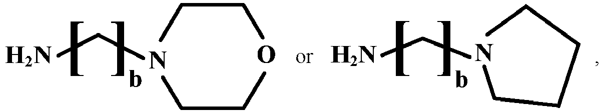 where
b is an integer, and 1 ≤ b ≤ 5.

In some possible implementations, the binary epoxy compound includes: a non-epoxy connection group, and two epoxy groups respectively connected to two ends of the non-epoxy connection group.

In some possible implementations, a chemical structural formula of the binary epoxy compound is one of the following chemical structural formulas: 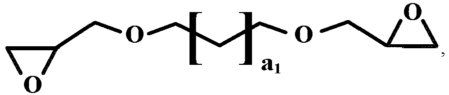 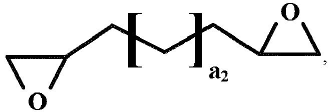 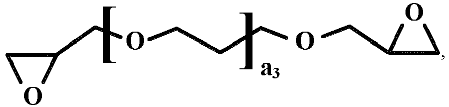 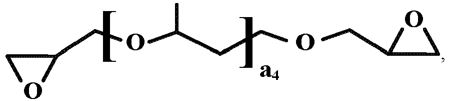 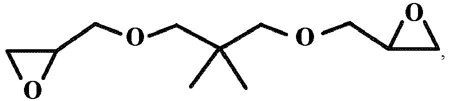 or 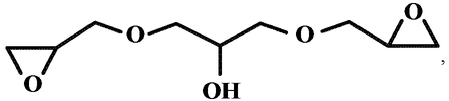 where
a₁, a₂, a₃, and a₄ are all integers, and each is an integer ranging from 0 to 8.

In some possible implementations, a reaction temperature of the polymerization reaction ranges from 60°C to 75°C. Within the foregoing reaction temperature range, the polymerization reaction can be performed quickly and thoroughly, and has a high reaction rate. In addition, the reaction temperature may be kept stable by water bath or oil bath.

In some possible implementations, the solvent includes at least one of ethanol, methanol, and water.

In still another aspect, an application of any one of the foregoing polymers in preparation of a leveling agent is provided.

The any one of the foregoing polymers is any one of the polymers in the foregoing implementations of the polymer and the implementations of the polymer preparation method in this disclosure.

The polymers provided in this embodiment of this disclosure can be used to prepare a leveling agent. In some cases, the polymers can be directly used as the leveling agent, and the leveling agent obtained through preparation is particularly conducive to obtaining a highly uniform plating. In addition, the prepared leveling agent is applicable for obtaining a high-coplanarity plating at a high current density. In other words, the leveling agent prepared based on the polymer provided in this embodiment of this disclosure can effectively resolve a contradiction between electroplating production efficiency and plating coplanarity On a premise that the plating coplanarity (for example, copper pillar coplanarity) is not lost, an electroplating rate can be significantly improved. For example, the electroplating rate is improved to being at least greater than 2 µm/min, and further greater than 4 µm/min.

In still another aspect, a leveling agent is provided, where the leveling agent includes any one of the foregoing polymers.

The any one of the foregoing polymers is any one of the polymers in the foregoing implementations of the polymer and the implementations of the polymer preparation method in this disclosure.

In some possible implementations, a chemical structural formula of the polymer is shown as follows: 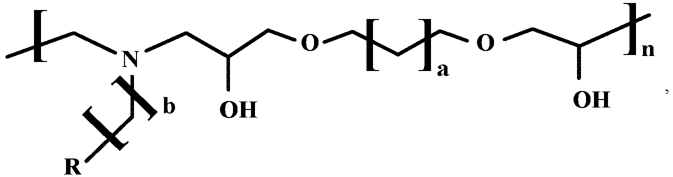 where 2 ≤ a ≤ 4, 2 ≤ b ≤ 3, and 5 ≤ n ≤ 40; and

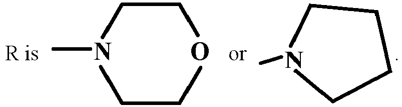

In still another aspect, a leveling agent preparation method is provided. The leveling agent preparation method is the same as any one of the foregoing polymer preparation methods in embodiments of this disclosure. In other words, the leveling agent expected in this embodiment of this disclosure can be obtained by using a method the same as any one of the polymer preparation methods in embodiments of this disclosure.

According to still another aspect of embodiments of this disclosure, an electroplating solution is provided, where the electroplating solution includes any one of the foregoing leveling agents.

Any one of the foregoing leveling agents in embodiments of this disclosure may be used in the electroplating solution, to obtain a highly uniform plating. In addition, a high-coplanarity plating can also be obtained at a high current density. The electroplating solution provided in this embodiment of this disclosure effectively resolves a contradiction between electroplating production efficiency and plating coplanarity On a premise that the plating coplanarity (for example, copper pillar coplanarity) is not lost, an electroplating rate can be significantly improved. Compared with improving a device or replacing an electroplating solution system, using the electroplating solution provided in this embodiment of this disclosure to resolve the foregoing technical problem is easier, more convenient, and more reliable, and further facilitates maintenance of the electroplating solution.

In some possible implementations, the electroplating solution further includes: a metal salt, an acid solution, a water-soluble chloride, an accelerator, and an inhibitor, where
a concentration of the metal salt in the electroplating solution ranges from 5 g/L to 300 g/L;
a concentration of the acid solution in the electroplating solution ranges from 10 g/L to 300 g/L;
a concentration of chloride ions in the water-soluble chloride in the electroplating solution ranges from 1 ppm to 100 ppm;
a concentration of the leveling agent in the electroplating solution ranges from 0.01 ppm to 1000 ppm;
a concentration of the accelerator in the electroplating solution ranges from 0.01 ppm to 100 ppm; and
a concentration of the inhibitor in the electroplating solution ranges from 1 ppm to 2000 ppm.

In some possible implementations, the metal salt includes at least one of copper sulfate, copper cyanide, and copper pyrophosphate;
the acid solution includes at least one of sulfuric acid, hydrochloric acid, and organic acid; and
the water-soluble chloride includes at least one of hydrochloric acid, sodium chloride, potassium chloride, and ammonium chloride.

In some possible implementations, the accelerator is at least one of sodium polydisulfide dispropane sulfonate and sodium 3-mercapto-1-propane sulfonate. The foregoing type of accelerator facilitates dense distribution of the plating, improves a uniform plating capability of the electroplating solution, and enables the plating to be smooth and reflective.

The inhibitor includes at least one of polyethylene glycol, polypropylene glycol, PEO-PPO-PEO block copolymer, and PPO-PEO-PPO block copolymer. The foregoing type of inhibitor is easily adsorbed at an active point of grain growth. This increases an electrochemical reaction resistor and enhances electrochemical polarization, so that grains are refined and growth of a board surface plating is inhibited.

According to still another aspect of embodiments of this disclosure, a method for electroplating a to-be-plated part is provided. The method includes: using any one of the foregoing electroplating solutions.

The to-be-plated part is a to-be-plated cathode part, and a material of the to-be-plated part includes but is not limited to: resin, ceramic, metal, a silicon die, and the like.

A highly uniform plating can be obtained by performing electroplating by using the electroplating solution provided in this embodiment of this disclosure. Particularly, even in a case of a high current density and a high plating rate, a high-uniformity plating can still be obtained. In addition, high electroplating efficiency is ensured.

In some possible implementations, the method includes: performing the electroplating at a current density greater than or equal to 5 ASD.

In some possible implementations, the method includes: performing the electroplating at a current density greater than or equal to 15 ASD.

In some examples, the method for electroplating a to-be-plated part provided in this embodiment of this disclosure includes: performing electroplating when a plating rate is greater than or equal to 2 µm/min.

It can be learned that the electroplating method provided in this embodiment of this disclosure is applicable for being used at a high current density and obtaining a high-coplanarity plating.

In some examples, in this embodiment of this disclosure, a silicon wafer is used as a to-be-plated cathode part, copper ions are used as to-be-plated metal, and an electroplating operation is performed in the foregoing electroplating solution, so that a high-coplanarity copper pillar can be formed on the silicon wafer. In addition, a current density during electroplating is greater than 5 ASD, and further, the current density is greater than or equal to 15 ASD. A plating rate is greater than 2 µm/min, and further, the plating speed is greater than 4 µm/min.

### BRIEF DESCRIPTION OF DRAWINGS

FIG. 1 is a diagram of a laser confocal microscope of a copper pillar according to Test Case 1 of this disclosure;
FIG. 2 is a diagram of a laser confocal microscope of a copper pillar according to Test Case 2 of this disclosure;
FIG. 3 is a diagram of a laser confocal microscope of a copper pillar according to Test Case 3 of this disclosure;
FIG. 4 is a diagram of a laser confocal microscope of a copper pillar according to Comparative Example 1 of this disclosure; and
FIG. 5 is a diagram of a laser confocal microscope of a copper pillar according to Comparative Example 2 of this disclosure.

### DESCRIPTION OF EMBODIMENTS

To make technical solutions and advantages of this disclosure clearer, the following further describes implementations of this disclosure in detail with reference to accompanying drawings.

As an important component of a semiconductor chip, a metal interconnection line may interconnect components in an integrated circuit to form a required circuit. As a typical metal interconnection line, a copper pillar (Cu pillar) is widely used in an integrated circuit. In the integrated circuit, the copper pillar is used to form a connection between a chip and a substrate, and has superior electrical performance, thermal performance, and reliability. The copper pillar is obtained through preparation based on an electroplating process. The electroplating process includes: using copper as an anode, using a silicon wafer as a cathode, and performing electroplating in an electroplating solution, so that the copper is deposited on the silicon wafer to form the copper pillar.

To avoid an electrical connection failure, a high requirement is imposed on flatness of the copper pillar, namely, copper pillar coplanarity. Generally, a non-coplanarity rate that represents the copper pillar coplanarity is required to be less than 10%, so that the copper pillar has high coplanarity

The non-coplanarity rate represents a ratio of a height of a defect like a protrusion or a depression on a top surface of a single copper pillar to a height of a shoulder of the copper pillar, and also represents a difference (namely, copper pillar array coplanarity) of copper pillar heights on a same to-be-plated cathode part. The difference refers to the following: In a wafer of each die (die), a maximum value of the copper pillar minus a minimum value of the copper pillar before being divided by twice an average height of the copper pillar.

In the conventional technology, a leveling agent is added into the electroplating solution to improve copper pillar coplanarity. For example, a chemical structure of the leveling agent is shown as follows: 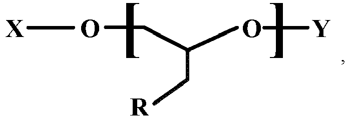 where
X is hydrogen, an alkyl group, monool, diol, triol, or a polyol group, Y is hydrogen, an alkyl group, monool, diol, triol, or a polyol group, and R is a nitrogen-containing atomic group.

A current density directly affects a plating rate of the copper pillar, and further affects production efficiency of the copper pillar, where a larger current density indicates a higher plating rate. To achieve high copper pillar production efficiency, a current density is expected to be greater than 5 ASD (ampere/square decimeter) during electroplating. However, a leveling agent provided in the conventional technology is not suitable for being used at a high current density. When electroplating is performed by using an electroplating solution including the leveling agent, an increasing current density indicates decreasing copper pillar coplanarity It can be learned that it is extremely necessary to provide a leveling agent suitable for being used at a high current density.

According to one aspect of embodiments of this disclosure, embodiments of this disclosure provide a polymer. The polymer includes a plurality of repeating units, and the repeating unit includes: a binary epoxy compound residual group and a nitrogen-containing group.

The binary epoxy compound residual group is a residue formed after an epoxy bond of a binary epoxy compound is ring-opened.

The nitrogen-containing group includes: an alkyl group, and a dimethylamine group and a nitrogen-containing heterocyclic group that are respectively connected to two ends of the alkyl group, where the dimethylamine group is further connected to the binary epoxy compound residual group through a single bond.

In an electroplating process, the cathode is usually a to-be-plated irregular part. For example, the cathode is a graph having different interconnection structures. Based on initial current density distribution in the electroplating process, a current density in a short-distance area that is on the cathode and whose geometric distance from the anode is smaller (namely, closer) is larger, and a current density in a long-distance area that is on the cathode and whose geometric distance from the anode is larger (namely, farther) is smaller. A current density difference caused by a geometric structure of the cathode leads to a non-uniform plating on the to-be-plated cathode part. According to a current density distribution rule, plating non-uniformity becomes increasingly serious with increase of the current density. In a microelectronics manufacturing process, an extremely high and almost strict requirement is imposed on a metal interconnection structure, namely, plating uniformity. Therefore, when the electroplating process is used for microelectronics manufacturing, to ensure uniformity of the plating on the to-be-plated cathode part, an additive needs to be added into the electroplating solution to characteristically accelerate and inhibit a deposition speed of the plating at different sites, and achieve a uniform plating.

In the polymer provided in this embodiment of this disclosure, the binary epoxy compound residual group and the nitrogen-containing group are combined to form the repeating unit. Both the dimethylamine group and the nitrogen-containing heterocyclic group of the nitrogen-containing group include N atoms. Therefore, both the dimethylamine group and the nitrogen-containing heterocyclic group are strongly electropositive functional groups, and have strong electropositivity. When the polymer is used in an electroplating process, the N atoms in the nitrogen-containing group of the polymer can be characteristically adsorbed in a high current density area on a to-be-plated cathode part, to compete with anodic ions. In this way, the polymer inhibits metal deposition (for example, copper deposition) in the high current density area through steric hindrance, to slow down an electroplating speed in the high current density area. Further, when the nitrogen-containing group is used, the nitrogen-containing group is used in combination with the binary epoxy compound residual group, so that the polymer further has characteristics of convection dependence and current intensity dependence (where convection means that the electroplating solution is flowing, and a larger flow speed of the electroplating solution indicates higher convection intensity). In this way, in an area with higher convection intensity, the polymer has stronger adsorption on the to-be-plated cathode part, and in an area with lower convection intensity, the polymer has weaker absorption on the to-be-plated cathode part. In addition, the polymer can adaptively adjust the adsorption of the polymer on the to-be-plated cathode part based on a value of a current density, provide strong metal deposition inhibition in an area with a high current density, and provide weak metal deposition inhibition in an area with a low current density.

It may be learned that the polymer provided in this embodiment of this disclosure facilitates obtaining a highly uniform plating, and is particularly applicable for obtaining a high-coplanarity plating at a high current density. This is of positive significance for improving plating coplanarity while increasing a plating rate at the high current density, so that the polymer in this embodiment of this disclosure is particularly applicable for being used as a leveling agent in the electroplating solution.

In some possible implementations, in the nitrogen-containing group, a quantity of carbon atoms of the alkyl group ranges from 1 to 5, for example, 1, 2, 3, 4, and 5. The quantity of carbon atoms of the alkyl group falls within the foregoing range, so that the polymer has a proper molecular weight, and the polymer can obtain a better adsorption capability on the to-be-plated cathode part.

In some possible implementations, in the nitrogen-containing group, the nitrogen-containing heterocyclic group is a morpholine group or a pyrrole group. Both the morpholine group and the pyrrole group are strongly electropositive groups, thereby helping the polymer to be adsorbed in the high current density area.

Based on the foregoing description, in this embodiment of this disclosure, a chemical structure formula of the nitrogen-containing group includes one of the following chemical structure formulas: 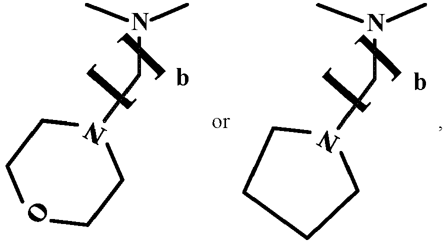 where
b is an integer, and 1 ≤ b ≤ 5.

The binary epoxy compound residual group is a residual group from the binary epoxy compound, where two epoxy bonds in the binary epoxy compound participate in a polymerization reaction and then are ring-opened, to form the foregoing binary epoxy compound residual group.

In some possible implementations, the binary epoxy compound residual group includes: a non-epoxy connection group, and two epoxy residues respectively connected to two ends of the non-epoxy connection group. The epoxy residue is a residue formed after the epoxy bond is ring-opened, and the epoxy residue is connected to the dimethylamine group.

The non-epoxy connection group is a group that does not contain an epoxy group. If the non-epoxy connection group is defined as M, a chemical structural formula of the binary epoxy compound residual group is shown as follows:

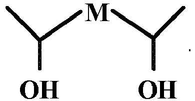

A chemical structural formula of the polymer formed by combining the binary epoxy compound residual group and the nitrogen-containing group is shown as follows:

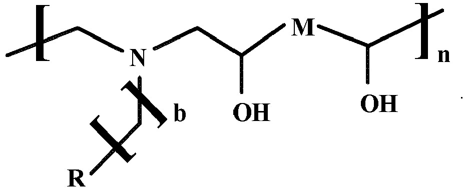

In some possible implementations, a chemical structural formula of the binary epoxy compound residual group is one of the following chemical structural formulas: 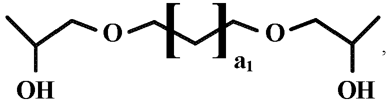 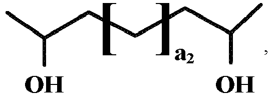 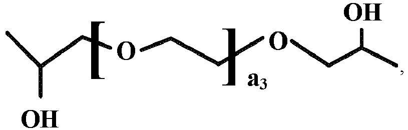 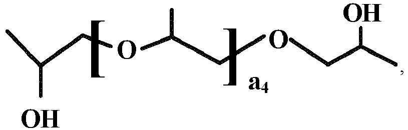 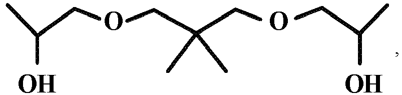 or

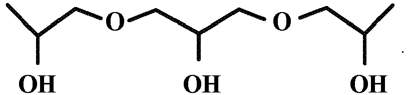

In these formulas, a₁, a₂, a₃, and a₄ are all integers, and each is an integer ranging from 0 to 8. For example, each may be 0, 1, 2, 3, 4, 5, 6, 7, or 8.

In some possible implementations, a quantity of repeating units in the polymer ranges from 3 to 100, for example, an integer ranging from 3 to 90, an integer ranging from 3 to 80, an integer ranging from 3 to 70, an integer ranging from 3 to 60, an integer ranging from 3 to 50, an integer ranging from 3 to 40, an integer ranging from 3 to 30, or an integer ranging from 3 to 20. This enables the polymer to have a proper molecular weight and obtain a better absorption capability on the to-be-plated cathode part.

In some possible implementations, an embodiment of this disclosure provides such a polymer. A chemical structural formula of the polymer is shown as follows: 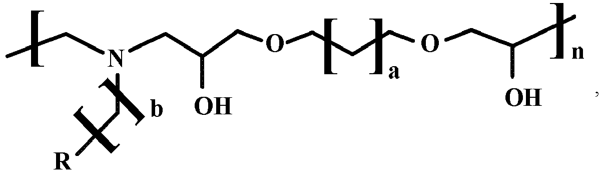 where 0 ≤ a ≤ 8, 1 ≤ b ≤ 5, 3 ≤ n ≤ 100, and a, b, and n are all integers; and

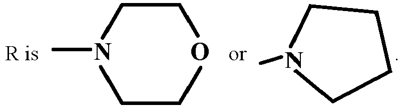

For example, a may be 0, 1, 2, 3, 4, 5, 6, 7, or 8; b may be 1, 2, 3, 4, or 5; and n is an integer ranging from 3 to 100, for example, an integer ranging from 3 to 90, an integer ranging from 3 to 80, an integer ranging from 3 to 70, an integer ranging from 3 to 60, an integer ranging from 3 to 50, an integer ranging from 3 to 40, an integer ranging from 3 to 30, or an integer ranging from 3 to 20.

The polymer having the foregoing chemical structural formula provided in this embodiments of this disclosure is particularly conducive to obtaining a highly uniform plating, and is applicable for obtaining a high-coplanarity plating at a high current density. In other words, when the polymer having the foregoing chemical structural formula is used in the electroplating solution, a contradiction between electroplating production efficiency and plating coplanarity can be effectively resolved. An electroplating rate can be significantly improved while ensuring the plating coplanarity (for example, copper pillar coplanarity). For example, the electroplating rate is improved to being greater than 2 µm/min, and further greater than 4 µm/min. Compared with improving a device or replacing an electroplating solution system, using the polymer provided in this embodiment of this disclosure to resolve the foregoing technical problem is easier, more convenient, and more reliable, and further facilitates maintenance of the electroplating solution.

In some examples, a is 2, 3, or 4; b is 2 or 3; and n is an integer ranging from 5 to 40. This enables the polymer to have a more proper molecular weight and an N atomic density, so that the polymer can obtain a better adsorption capability on the to-be-plated cathode part.

For example, when a is 2, b is 2, and R is 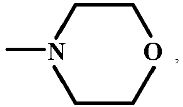 a chemical structural formula corresponding to the polymer is shown as follows:

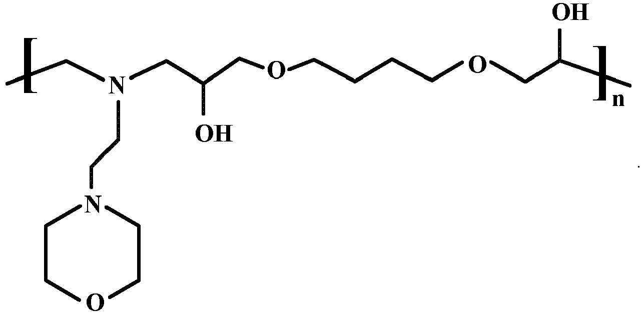

For example, when a is 2, b is 3, and R is 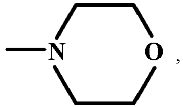 a chemical structural formula corresponding to the polymer is shown as follows:

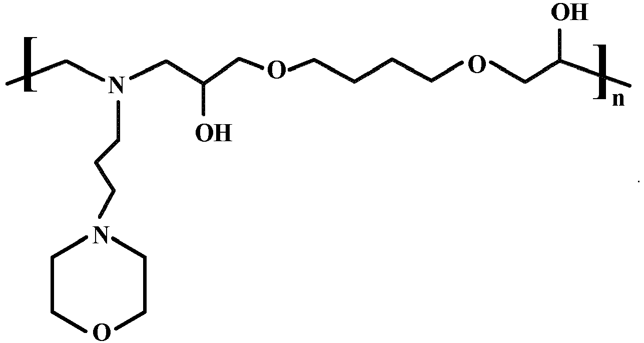

For example, when a is 2, b is 3, and R is 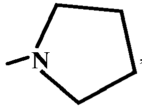 a chemical structural formula corresponding to the polymer is shown as follows:

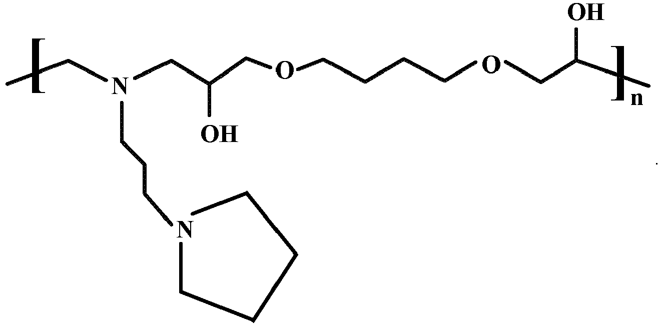

For example, when a is 4, b is 3, and R is 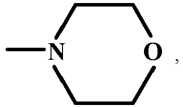 a chemical structural formula corresponding to the polymer is shown as follows:

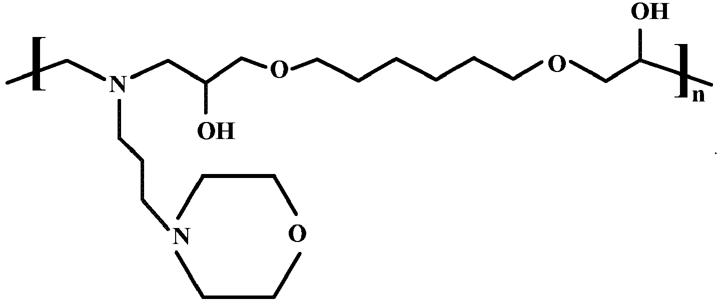

According to another aspect of embodiments of this disclosure, a polymer preparation method is further provided, where a polymer includes a plurality of repeating units. The repeating unit includes: a binary epoxy compound residual group and a nitrogen-containing group. The nitrogen-containing group includes: an alkyl group, and a dimethylamine group and a nitrogen-containing heterocyclic group that are respectively connected to two ends of the alkyl group, where the dimethylamine group is further connected to the binary epoxy compound residual group through a single bond.

The polymer preparation method includes: performing a polymerization reaction on a binary epoxy compound and a nitrogen-containing compound in a solvent to obtain the polymer.

A residue formed after an epoxy bond of the binary epoxy compound is ring-opened is used as the binary epoxy compound residual group in the polymer

The nitrogen-containing compound includes: an alkyl group, and an amine group and a nitrogen-containing heterocyclic group that are respectively connected to two ends of the alkyl group, where a residue formed after the amine group of the nitrogen-containing compound participates in the polymerization reaction is used as the nitrogen-containing group.

According to the polymer preparation method provided in this embodiment of this disclosure, the polymerization reaction is performed on the binary epoxy compound and the nitrogen-containing compound in the solvent. Two epoxy groups at two ends of the binary epoxy compound and the amine group in the nitrogen-containing compound participate in the polymerization reaction, and the epoxy group in the binary epoxy compound can be polymerized with active hydrogen on the amine group in the nitrogen compound. During the reaction, the epoxy group is ring-opened to generate a hydroxyl group and a methylene group, and the amine group forms the dimethylamine group. The dimethylamine group is used as a nucleophile, and is connected to the methylene group. In other words, the epoxy group in the binary epoxy compound forms the hydroxyl group and the methylene group in the binary epoxy compound residual group after the polymerization reaction, and the amino group in the nitrogen-containing compound forms the dimethylamine group in the nitrogen-containing group after the polymerization reaction. The dimethylamine group and the methylene group are connected through a single bond, and further, a connection between the nitrogen-containing group and the binary epoxy compound residual group is implemented, to obtain the polymer shown in this embodiment of this disclosure.

It may be learned that the repeating unit in the polymer obtained through preparation based on the foregoing polymer preparation method includes: a binary epoxy compound residual group and a nitrogen-containing group. The nitrogen-containing group includes: an alkyl group, and a dimethylamine group and a nitrogen-containing heterocyclic group that are respectively connected to two ends of the alkyl group, where the dimethylamine group is further connected to the binary epoxy compound residual group through a single bond.

For the nitrogen-containing compound, the alkyl group and the nitrogen-containing heterocyclic group do not participate in the polymerization reaction, so that the alkyl group and the nitrogen-containing heterocyclic group in the nitrogen-containing compound are the same as the alkyl group and the nitrogen-containing heterocyclic group in the nitrogen-containing group in the polymer

A molecular weight (namely, the quantity of repeating units) of the polymer may be controlled by at least one of the following parameters: mass of the binary epoxy compound and the nitrogen-containing compound, a reaction time period, a reaction temperature, and the like. For example, when the reaction time period is within 24 hours, if an amount of the binary epoxy compound and the nitrogen-containing compound is sufficient, a longer reaction time period indicates a larger quantity of repeating units. When the reaction time period exceeds 24 hours, the quantity of repeating units can be controlled more by using another factor.

In some possible implementations, in the nitrogen-containing group, a quantity of carbon atoms of the alkyl group ranges from 1 to 5, for example, 1, 2, 3, 4, and 5. The quantity of carbon atoms of the alkyl group falls within the foregoing range, so that the polymer has a proper molecular weight, and the polymer can obtain a better adsorption capability on the to-be-plated cathode part.

In some possible implementations, in the nitrogen-containing group, the nitrogen-containing heterocyclic group is a morpholine group or a pyrrole group. Both the morpholine group and the pyrrole group are strongly electropositive groups, thereby helping the polymer to be adsorbed in the high current density area.

In some possible implementations, a chemical structural formula of the nitrogen-containing compound in this embodiment of this disclosure includes: 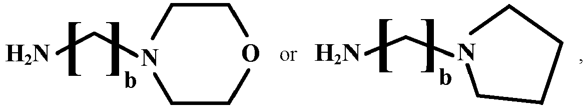 where
b is an integer, and 1 ≤ b ≤ 5.

For example, for a nitrogen-containing compound having a morpholine group, when b is 2, the nitrogen-containing compound is N-(2-aminoethyl)morpholine; and when b is 3, the nitrogen-containing compound is N-(3-aminopropyl)morpholine.

For a nitrogen-containing compound having a pyrrole group, when b is 2, the nitrogen-containing compound is N-(2-aminoethyl)pyrrolidine; and when b is 3, the nitrogen-containing compound is N-(3-aminopropyl)pyrrolidine.

In some possible implementations, the binary epoxy compound includes: a non-epoxy connection group, and two epoxy groups respectively connected to two ends of the non-epoxy connection group. The non-epoxy connection group does not participate in the polymerization reaction, and only the two epoxy groups participate in the polymerization reaction.

For example, a chemical structural formula of the binary epoxy compound is one of the following chemical structural formulas: 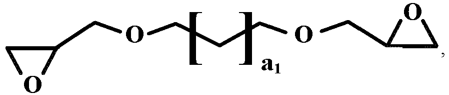 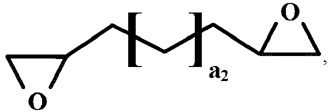 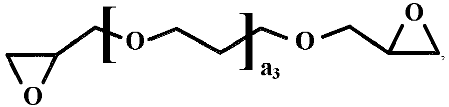 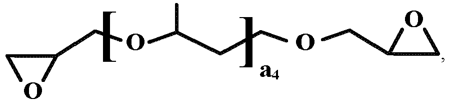 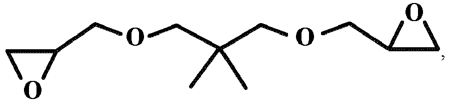 or 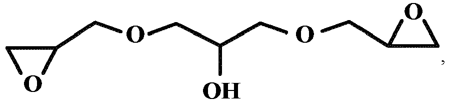 where
a₁, a₂, a₃, and a₄ are all integers, and each is an integer ranging from 0 to 8.

For example, an embodiment of this disclosure provides a binary epoxy compound that is particularly suitable for preparing a leveling agent. A chemical structural formula of the binary epoxy compound is shown as follows:

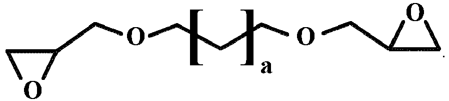

When a is 2, the binary epoxy compound is 1,4-butanediol diglycidyl ether; and when a is 4, the binary epoxy compound is 1,6-hexanediol diglycidyl ether.

In some possible implementations, a chemical structural formula of the polymer is shown as follows: 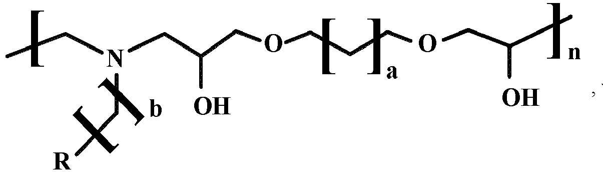 where 0 ≤ a ≤ 8, 1 ≤ b ≤ 5, 3 ≤ n ≤ 100, and a, b, and n are all integers; and

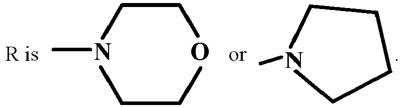

For example, a may be 0, 1, 2, 3, 4, 5, 6, 7, or 8; b may be 1, 2, 3, 4, or 5; and n is an integer ranging from 3 to 100.

In some examples, when the binary epoxy compound is 1,4-butanediol diglycidyl ether and the nitrogen-containing compound is N-(3-aminopropyl)morpholine, a chemical structural formula of the polymer obtained through preparation is shown as follows:

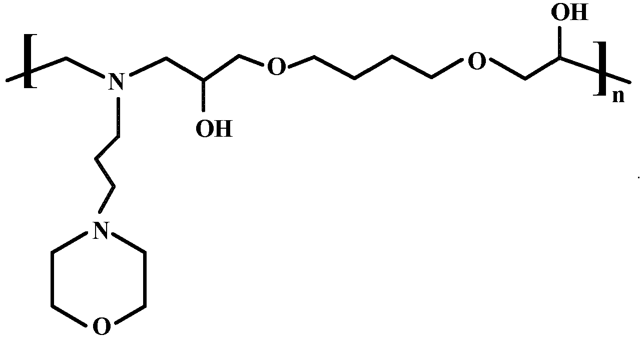

In some examples, when the binary epoxy compound is 1,4-butanediol diglycidyl ether and the nitrogen-containing compound is N-(3-aminopropyl)pyrrolidine, a chemical structural formula of the polymer obtained through preparation is shown as follows:

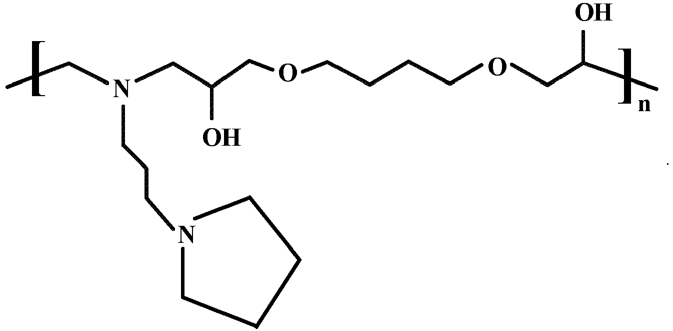

In some examples, when the binary epoxy compound is 1,6-hexanediol diglycidyl ether and the nitrogen-containing compound is N-(3-aminopropyl)morpholine, a chemical structural formula of the polymer obtained through preparation is shown as follows:

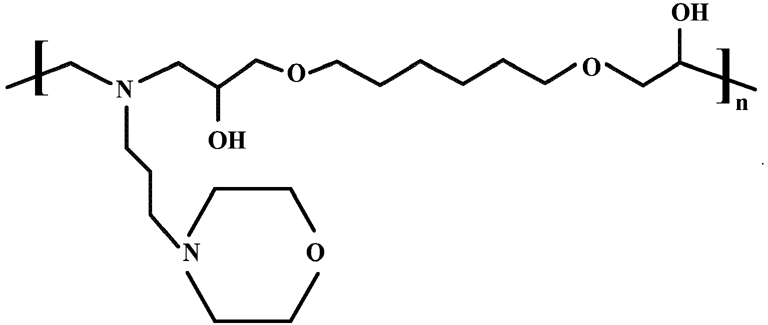

To make the polymerization reaction fully and thoroughly performed, the foregoing polymerization reaction may be performed under a stirring condition. Further, the nitrogen-containing compound may be gradually added into the binary epoxy compound. This facilitates full and uniform mixing of the binary epoxy compound and the nitrogen-containing compound.

In this embodiment of this disclosure, a reaction temperature of the polymerization reaction between the binary epoxy compound and the nitrogen-containing compound ranges from 60°C to 75°C. For example, the reaction temperature includes but is not limited to 60°C, 61°C, 62°C, 63°C, 64°C, 65°C, 66°C, 67°C, 68°C, 69°C, 70°C, 71°C, 72°C, or the like.

Within the foregoing reaction temperature range, the polymerization reaction can be performed quickly and thoroughly, and has a high reaction rate. In addition, the reaction temperature may be kept stable by water bath or oil bath.

The polymerization reaction between the binary epoxy compound and the nitrogen-containing compound is performed in a solvent. In this embodiment of this disclosure, an applicable solvent includes at least one of ethanol, methanol, and water. For example, the solvent is ethanol.

After the polymerization reaction is completed, post-processing needs to be performed on a reaction system, to remove the solvent from the reaction system and obtain a high-purity leveling agent. For example, the post-processing includes but is not limited to reduced-pressure distillation or the like. For example, a rotary evaporator is used to perform reduced-pressure rotary evaporation, to quickly remove the solvent from the reaction system.

According to still another aspect of embodiments of this disclosure, application that is of any one of the foregoing polymers in embodiments of this disclosure and that is in preparation of a leveling agent is further provided.

The any one of the foregoing polymers is any one of the polymers in the foregoing implementations of the polymer and the implementations of the polymer preparation method in this disclosure.

The polymers provided in this embodiment of this disclosure can be used to prepare a leveling agent. In some cases, the polymers can be directly used as the leveling agent, and the leveling agent obtained through preparation is particularly conducive to obtaining a highly uniform plating. In addition, the prepared leveling agent is applicable for obtaining a high-coplanarity plating at a high current density. In other words, the leveling agent prepared based on the polymer provided in this embodiment of this disclosure can effectively resolve a contradiction between electroplating production efficiency and plating coplanarity. An electroplating rate can be significantly improved while ensuring the plating coplanarity (for example, copper pillar coplanarity),. For example, the electroplating rate is improved to being at least greater than 2 µm/min, and further greater than 4 µm/min.

According to still another aspect of embodiments of this disclosure, a leveling agent is provided. The leveling agent includes any one of the foregoing polymers in embodiments of this disclosure.

The any one of the foregoing polymers is any one of the polymers in the foregoing implementations of the polymer and the implementations of the polymer preparation method in this disclosure.

In some examples, the leveling agent has a chemical structural formula shown as follows: 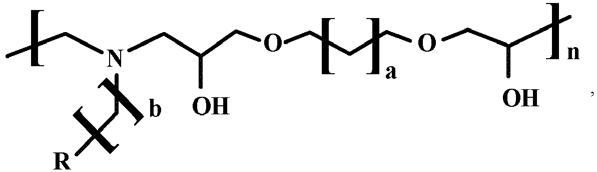 where
0≤a≤8 (further, 2≤a≤4), 1≤b≤5 (further, 2≤b≤3), 3≤n≤100 (further, 5≤n≤40), and a, b, and n are all integers; and

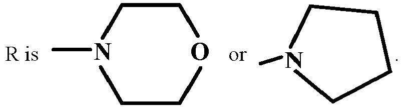

The leveling agent having the foregoing chemical structure provided in this embodiment of this disclosure has, at different convection positions, a function of adjusting current distribution on a to-be-plated cathode part (like a wafer) (where the convection position is a position through which a flowing electroplating solution passes, and a larger flow rate of the electroplating solution indicates higher convection intensity). The leveling agent has a strongly electropositive functional group containing N atoms and has strong electropositivity. Therefore, the N atoms can be characteristically adsorbed in a high current density area on the to-be-plated cathode part to compete with anode ions. In this way, the leveling agent inhibits metal deposition (for example, copper deposition) in the high current density area through steric hindrance, to slow down an electroplating speed in the high current density area. In addition, in an area with higher convection intensity, the leveling agent has stronger adsorption on the to-be-plated cathode part; and in an area with lower convection intensity, the leveling agent has weaker adsorption on the to-be-plated cathode part. In addition, the leveling agent can adaptively adjust the adsorption of the polymer on the to-be-plated cathode part based on a value of a current density, provide strong metal deposition inhibition in an area with a high current density, and provide weak metal deposition inhibition in an area with a low current density, to finally obtain a highly uniform plating. Particularly, the leveling agent can also obtain a high-coplanarity plating at a high current density. This is of positive significance for improving plating coplanarity while increasing a plating speed at the high current density.

It can be learned that when the leveling agent provided in this embodiment of this disclosure is used in the electroplating solution, a contradiction between electroplating production efficiency and plating coplanarity is effectively resolved. The electroplating rate can be increased to being at least greater than 2 µm/min, and further greater than 4 µm/min while ensuring the plating coplanarity (for example, copper pillar coplanarity). Compared with improving a device or replacing an electroplating solution system, using the leveling agent provided in this embodiment of this disclosure to resolve the foregoing technical problem is easier, more convenient, and more reliable, and further facilitates maintenance of the electroplating solution.

When a is 2, 3, or 4, b is 2 or 3, and n is an integer ranging from 5 to 40, the leveling agent has a proper molecular weight and an N atomic density, so that the leveling agent can obtain a better adsorption capability on the to-be-plated cathode part.

In some examples, when a is 2, b is 2, and R is 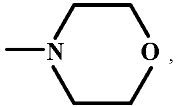 a chemical structural formula corresponding to the leveling agent is shown as follows:

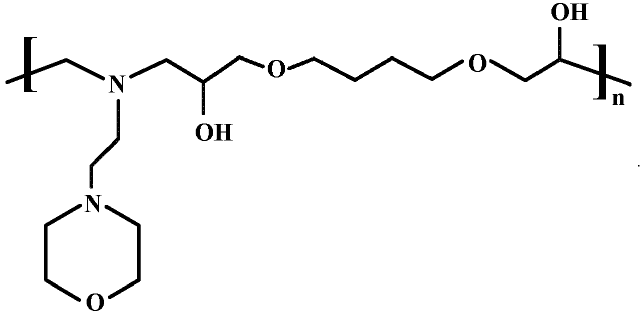

In some examples, when a is 2, b is 3, and R is 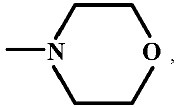 a chemical structural formula corresponding to the leveling agent is shown as follows:

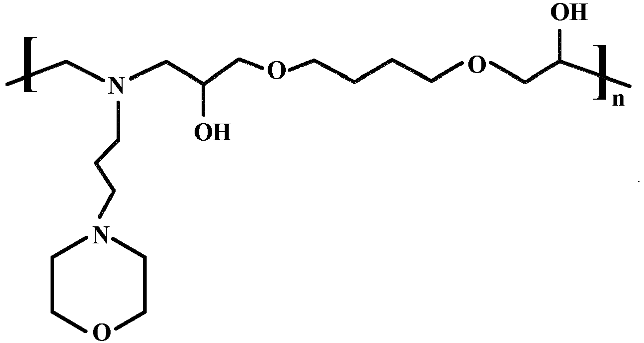

In some examples, when a is 2, b is 3, and R is 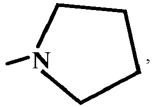 a chemical structural formula corresponding to the leveling agent is shown as follows:

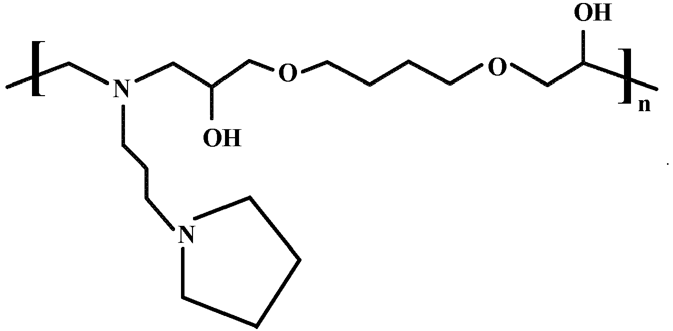

In some examples, when a is 4, b is 3, and R is 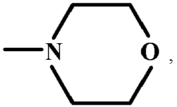 a chemical structural formula corresponding to the leveling agent is shown as follows:

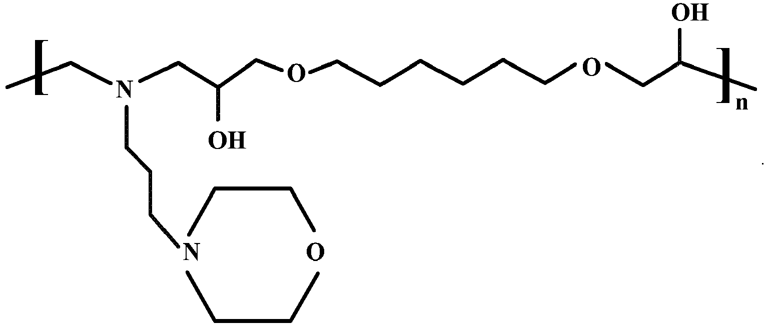

According to still another aspect of embodiments of this disclosure, an embodiment of this disclosure further provides a leveling agent preparation method. The leveling agent preparation method is the same as any one of the foregoing polymer preparation methods in embodiments of this disclosure. In other words, the leveling agent expected in this embodiment of this disclosure can be obtained by using a method the same as any one of the polymer preparation methods in embodiments of this disclosure. Therefore, the leveling agent preparation method is not described herein again.

According to still another aspect of embodiments of this disclosure, an embodiment of this disclosure further provides an electroplating solution. The electroplating solution includes any one of the foregoing leveling agents.

Any one of the foregoing leveling agents in embodiments of this disclosure may be used in the electroplating solution, to obtain a highly uniform plating. In addition, a high-coplanarity plating can also be obtained at a high current density.

It may be learned that the electroplating solution provided in this embodiment of this disclosure effectively resolves a contradiction between electroplating production efficiency and plating coplanarity. An electroplating rate can be significantly improved while ensuring the plating coplanarity (for example, copper pillar coplanarity). Compared with improving a device or replacing an electroplating solution system, using the electroplating solution provided in this embodiment of this disclosure to resolve the foregoing technical problem is easier, more convenient, and more reliable, and further facilitates maintenance of the electroplating solution.

In some examples, a chemical structural formula of the leveling agent is shown as follows: 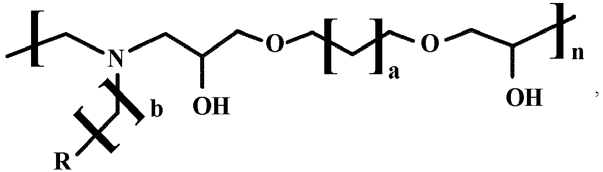 where
0 ≤ a ≤ 8, 1 ≤ b ≤ 5, 3 ≤ n ≤ 100, and a, b, and n are all integers; and

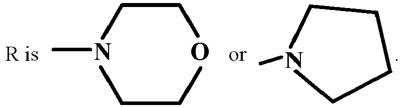

According to the electroplating solution provided in this embodiment of this disclosure, the leveling agent having the foregoing chemical structure is used, and the leveling agent has, at different convection positions, a function of adjusting current distribution on a to-be-plated cathode part. In this way, metal deposition in a high current density area can be inhibited through steric hindrance, so that an electroplating speed in the high current density area is slowed down. Based on use of the foregoing leveling agent, the electroplating solution provided in this embodiment of this disclosure is conducive to obtaining a highly uniform plating, and is conducive to improving usage stability of the electroplating solution. The electroplating solution is suitable for being used at a high current density, and can improve copper pillar coplanarity while increasing a plating speed at the high current density.

In addition to the leveling agent, the electroplating solution provided in this embodiment of this disclosure further includes other components. These other components include: a metal salt, an acid solution, a water-soluble chloride, an accelerator, and an inhibitor.

In some possible implementations, an embodiment of this disclosure provides such an electroplating solution. The electroplating solution includes: a metal salt, an acid solution, a water-soluble chloride, a leveling agent, an accelerator, and an inhibitor. The following further describes each component.

For the metal salt, the metal salt is used as an anode component to form a metal plating on a to-be-plated cathode part, and the metal plating is to-be-plated metal. The metal salt includes but is not limited to a copper salt, an aluminum salt, a silver salt, and the like that are suitable for electroplating. Particularly, the metal salt may be a commonly used copper salt. For example, the copper salt may include at least one of copper sulfate, copper cyanide, and copper pyrophosphate. In some examples, the copper salt is copper sulfate.

A concentration of the metal salt in the electroplating solution ranges from 5 g/L to 300 g/L. For example, the concentration of the metal salt in the electroplating solution includes but is not limited to the following: 10 g/L, 50 g/L, 100 g/L, 110 g/L, 120 g/L, 130 g/L, 140 g/L, 150 g/L, 160 g/L, 170 g/L, 180 g/L, 190 g/L, 200 g/L, 210 g/L, 220 g/L, 230 g/L, 240 g/L, 250 g/L, 260 g/L, 270 g/L, 280 g/L, 290 g/L, 300 g/L, or the like. Further, for example, the concentration of the metal salt in the electroplating solution ranges from 150 g/L to 250 g/L. The concentration of the metal salt is within the foregoing range. This ensures that sufficient metal ions are provided to the to-be-plated cathode part, and further facilitates full dissolution of the metal salt in the electroplating solution.

For the acid solution, the acid solution is used as an electrolyte to promote a redox reaction in an electroplating process. In some examples, the acid solution includes at least one of sulfuric acid, hydrochloric acid, and organic acid. For example, the acid solution is sulfuric acid, and concentrated sulfuric acid with a mass concentration of 98% and water may be used to prepare an acid solution with a mass concentration ranging from 30% to 60%.

A concentration of the acid solution in the electroplating solution ranges from 10 g/L to 300 g/L. For example, the concentration of the acid solution in the electroplating solution includes but is not limited to: 10 g/L, 20 g/L, 30 g/L, 40 g/L, 50 g/L, 60 g/L, 70 g/L, 80 g/L, 90 g/L, 100 g/L, 110 g/L, 120 g/L, 130 g/L, 140 g/L, 150 g/L, 160 g/L, 170 g/L, 180 g/L, 190 g/L, 200 g/L, 250 g/L, 280 g/L, or the like. Further, for example, the concentration of the acid solution in the electroplating solution ranges from 50 g/L to 150 g/L. The concentration of the acid solution is within the foregoing range. This ensures good conductivity of the electroplating solution, and further ensures full dissolution of the metal salt in the electroplating solution, to avoid precipitation.

For the water-soluble chloride, the water-soluble chloride is used as an inorganic additive to provide chloride ions, so as to coordinate with the inhibitor and the accelerator. In some examples, the water-soluble chloride includes at least one of hydrochloric acid, sodium chloride, potassium chloride, and ammonium chloride.

A concentration of chlorine ions is used as a reference, and the concentration of the chlorine ions in the water-soluble chloride in the electroplating solution ranges from 1 ppm to 100 ppm, for example, 10 ppm, 20 ppm, 30 ppm, 40 ppm, 50 ppm, 60 ppm, 70 ppm, 80 ppm, 90 ppm or 100 ppm. Further, for example, the concentration of the chloride ions in the water-soluble chloride in the electroplating solution ranges from 40 ppm to 80 ppm. The concentration of the water-soluble chloride is within the foregoing range. This ensures that each of the leveling agent, the inhibitor, and the accelerator effectively plays a due role in the electroplating solution, further avoids generation of chlorine gas at an anode, and accordingly, avoids formation of a side reaction.

For the leveling agent, as shown above, a concentration of the leveling agent provided in this embodiment of this disclosure in the electroplating solution ranges from 0.01 ppm to 1000 ppm. For example, the concentration of the leveling agent includes but is not limited to: 0.01 ppm, 0.05 ppm, 0.1 ppm, 0.5 ppm, 1 ppm, 5 ppm, 10 ppm, 20 ppm, 50 ppm, 100 ppm, 200 ppm, 300 ppm, 400 ppm, 500 ppm, 600 ppm, 700 ppm, 800 ppm, 900 ppm, or the like. Further, for example, the concentration of the leveling agent in the electroplating solution ranges from 0.1 ppm to 500 ppm, or further, ranges from 0.1 ppm to 100 ppm. The concentration of the leveling agent is within the foregoing range. This facilitates better coordination with other components in the electroplating solution, leads to strong adaptability to a current density, and leads to good uniform plating effect.

For the accelerator, the accelerator is used to form a crystal nucleus in the electroplating process, to improve a uniform plating capability of the electroplating solution. In some examples, the accelerator is at least one of sodium 3,3'-dithiodipropane sulfonate (Sodium 3,3'-dithiodipropane sulfonate, SPS) and sodium 3-mercaptopropanesulphonate (Sodium 3-mercaptopropanesulphonate, MPS). The foregoing type of accelerator facilitates dense distribution of the plating, improves a uniform plating capability of the electroplating solution, and enables the plating to be smooth and reflective.

A concentration of the accelerator in the electroplating solution ranges from 0.01 ppm to 100 ppm. For example, the concentration of the accelerator includes but is not limited to: 0.01 ppm, 0.05 ppm, 0.08 ppm, 0.1 ppm, 0.2 ppm, 0.3 ppm, 0.5 ppm, 0.6 ppm, 0.8 ppm, 1 ppm, 5 ppm, 10 ppm, 15 ppm, 20 ppm, 25 ppm, 30 ppm, 40 ppm, 50 ppm, 60 ppm, 70 ppm, 80 ppm, 90 ppm, 100 ppm, or the like. Further, for example, the concentration of the accelerator in the electroplating solution ranges from 0.05 ppm to 50 ppm, or further, ranges from 0.1 ppm to 20 ppm.

For the inhibitor, the inhibitor is used to increase an electrochemical reaction resistor, to achieve effect of refining a grain and inhibiting growth of a board surface plating. In some examples, the inhibitor includes at least one of polyethylene glycol, polypropylene glycol, PEO-PPO-PEO block copolymer, and PPO-PEO-PPO block copolymer. PPO (Polypropylene Oxide) polyoxypropylene, PEO (Polyethylene oxide) polyoxyethylene, and PEO-PPO-PEO block copolymer are also referred to as polyoxyethylene-polyoxypropylene-polyoxyethylene block copolymer. PPO-PEO-PPO block copolymer is also referred to as polyoxypropylene-polyoxyethylene-polyoxypropylene block copolymer. The foregoing type of inhibitor is easily adsorbed at an active point of grain growth. This increases an electrochemical reaction resistor and enhances electrochemical polarization, so that grains are refined and growth of a board surface plating is inhibited.

A concentration of the inhibitor in the electroplating solution ranges from 1 ppm to 2000 ppm. For example, the concentration of the inhibitor includes but is not limited to: 1 ppm, 5 ppm, 10 ppm, 15 ppm, 20 ppm, 30 ppm, 40 ppm, 50 ppm, 60 ppm, 70 ppm, 80 ppm, 90 ppm, 100 ppm, 200 ppm, 300 ppm, 400 ppm, 500 ppm, 600 ppm, 700 ppm, 800 ppm, 900 ppm, 1000 ppm, 1500 ppm, or the like. Further, for example, the concentration of the inhibitor in the electroplating solution ranges from 50 ppm to 1500 ppm, or further, ranges from 100 ppm to 1000 ppm.

According to the electroplating solution that has the foregoing components and that is provided in this embodiment of this disclosure, current distribution in the electroplating process can be effectively adjusted based on coordination of the metal salt, the acid solution, the water-soluble chloride, the leveling agent, the accelerator, and the inhibitor. In this way, dispersibility and a uniform plating capability of the electroplating solution are significantly improved, and a high-coplanarity plating, for example, a copper pillar, is obtained. Particularly, the electroplating solution is suitable for being used at a high current density, and a high-coplanarity plating can still be obtained at the high current density and a high plating speed.

The electroplating solution provided in this embodiment of this disclosure is applicable for forming a metal plating with a uniform thickness on a substrate. For example, the substrate includes but is not limited to a printed circuit board, an integrated circuit, a semiconductor package, a lead frame, and an interconnection. The electroplating solution provided in this embodiment of this disclosure is applicable to the field of microelectronic packaging. For example, the electroplating solution may be used for copper pillar electroplating in microelectronic packaging interconnection, thereby effectively improving copper pillar coplanarity at a high current density, and further effectively improving a service life and reliability of an electronic component.

According to still another aspect of embodiments of this disclosure, an embodiment of this disclosure further provides a method for electroplating a to-be-plated part. The foregoing electroplating solution is used in the method.

The to-be-plated part is a to-be-plated cathode part, and a material of the to-be-plated part includes but is not limited to: resin, ceramic, metal, a silicon die (namely, a wafer), and the like. For example, the resin may be used to obtain a to-be-plated cathode part through preparation, and the to-be-plated cathode part may be used as a printed circuit board. Alternatively, the ceramic may be used to obtain a to-be-plated cathode part through preparation, and the to-be-plated cathode part may be used as a semiconductor wafer. Alternatively, metal silicon may be used to obtain a to-be-plated cathode part through preparation, and the to-be-plated cathode part may be used as a wafer.

A highly uniform plating can be obtained by performing electroplating by using the electroplating solution provided in this embodiment of this disclosure. Particularly, even in a case of a high current density and a high plating rate, a high-uniformity plating can still be obtained. In addition, high electroplating efficiency is ensured.

In some examples, the method for electroplating a to-be-plated part provided in this embodiment of this disclosure includes: performing electroplating at a current density greater than or equal to 5 ASD, for example, greater than or equal to 10 ASD. Further, electroplating is performed at a current density greater than or equal to 15 ASD, for example, greater than or equal to 16 ASD, greater than or equal to 17 ASD, greater than or equal to 18 ASD, greater than or equal to 19 ASD, or greater than or equal to 20 ASD.

In some examples, the method for electroplating a to-be-plated part provided in this embodiment of this disclosure includes: performing electroplating when a plating rate is greater than or equal to 2 µm/min.

It can be learned that the electroplating method provided in this embodiment of this disclosure is applicable for being used at a high current density and obtaining a high-coplanarity plating.

In some examples, in this embodiment of this disclosure, a silicon wafer is used as a to-be-plated cathode part, copper ions are used as to-be-plated metal, and an electroplating operation is performed in the foregoing electroplating solution, so that a high-coplanarity copper pillar can be formed on the silicon wafer. In addition, a current density during electroplating is greater than 5 ASD, and further, the current density is greater than or equal to 15 ASD. A plating rate is greater than 2 µm/min, and further, the plating speed is greater than 4 µm/min.

The following further describes this disclosure by using more specific embodiments. Although the following describes some specific implementations, it should be understood that this disclosure may be implemented in various forms and should not be limited by the embodiments described herein. If no specific technology or condition is specified in the embodiments, a technology or condition described in the literature in the art or the product specification is used as a standard, and a reagent or an instrument on which a manufacturer is not specified may be a conventional product that can be obtained through market purchase.

### Embodiment 1

Embodiment 1 provides a polymer, where the polymer is obtained through preparation by using the following method.

1,4-butanediol diglycidyl ether of 3 g is dissolved into ethanol of 20 ml, stirring is performed evenly to obtain an intermediate mixed solution, N-(3-aminopropyl)morpholine of 1.93 g is added into the intermediate mixed solution under a stirring condition, and stirring is performed evenly to obtain a reaction raw material solution.

The reaction raw material solution is warmed up to 65°C, and then a polymerization reaction is performed at the temperature. After the polymerization reaction is performed for 24 hours, a reaction system is cooled to a room temperature, to obtain a yellow viscous solution.

Reduced-pressure rotary evaporation is performed on the yellow viscous solution, to remove ethanol and obtain the polymer.

### Embodiment 2

Embodiment 2 provides a polymer, where the polymer is obtained through preparation by using the following method.

1,4-butanediol diglycidyl ether of 3 g is dissolved into ethanol of 20 ml, stirring is performed evenly to obtain an intermediate mixed solution, N-(3-aminopropyl)pyrrolidine of 1.9 g is added into the intermediate mixed solution under a stirring condition, and stirring is performed evenly to obtain a reaction raw material solution.

The reaction raw material solution is warmed up to 67°C, and then a polymerization reaction is performed at the temperature. After the polymerization reaction is performed for 24 hours, a reaction system is cooled to a room temperature, to obtain a yellow viscous solution.

Reduced-pressure rotary evaporation is performed on the yellow viscous solution, to remove ethanol and obtain the polymer.

### Embodiment 3

Embodiment 3 provides a polymer, where the polymer is obtained through preparation by using the following method.

1,6-hexanediol diglycidyl ether of 2.8 g is dissolved into methanol of 30 ml, stirring is performed evenly to obtain an intermediate mixed solution, N-(3-aminopropyl)morpholine of 1.93 g is added into the intermediate mixed solution under a stirring condition, and stirring is performed evenly to obtain a reaction raw material solution.

The reaction raw material solution is warmed up to 70°C, and then a polymerization reaction is performed at the temperature. After the polymerization reaction is performed for 24 hours, a reaction system is cooled to a room temperature, to obtain a yellow viscous solution.

Reduced-pressure rotary evaporation is performed on the yellow viscous solution, to remove methanol and obtain the polymer

### Test cases

The polymer provided in Embodiment 1 and Embodiment 2 is used as a leveling agent in an electroplating solution (that is, each of the foregoing polymers is a leveling agent). Some electroplating solutions are provided for electroplating and are used as test cases (respectively corresponding to Test Case 1, Test Case 2, and Test Case 3). In addition, some electroplating solutions are correspondingly provided for electroplating and are used as comparative examples (respectively corresponding to Comparative Example 1 and Comparative Example 2), to test leveling effect of the leveling agent corresponding to Embodiment 1 and Embodiment 2 on the plating at the high current density.

The foregoing electroplating is actually a copper plating process. A silicon wafer (silicon chip for short) is used as a cathode, and a copper pillar is electroplated on the silicon wafer. A hanging plating process is used in the electroplating process.

For formulas in the test case and the comparative example, electroplating conditions, and copper pillar morphologies and copper pillar array coplanarity results obtained through electroplating, refer to Table 1. Copper sulfate in Table 1 is copper sulfate pentahydrate; chloride ions in Table 1 are all provided by sodium chloride; and EPE in Table 1 is a PEO-PPO-PEO block copolymer with a molecular weight of 6000.

**Table 1**

| Item | Test case 1 | Test case 2 | Test case 3 | Comparative example 1 | Comparative example 2 |
|---|---|---|---|---|---|
| Leveling agent | Embodiment 1 | Embodiment 1 | Embodiment 2 | None | None |
| Electroplating solution composition | Copper sulfate 200 g/l; | Copper sulfate 200 g/l; | Copper sulfate 200 g/l; | Copper sulfate 200 g/l; | Copper sulfate 200 g/l; |
| | sulfuric acid 100 g/l; | sulfuric acid 100 g/l; | sulfuric acid 100 g/l; | sulfuric acid 100 g/l; | sulfuric acid 100 g/l; |
| | chloride ion 60 ppm; | chloride ion 60 ppm; | chloride ion 60 ppm; | chloride ion 60 ppm; | chloride ion 60 ppm; |
| | leveling agent 1 ppm; | leveling agent 1 ppm; | leveling agent 1 ppm; | SPS 4 ppm; and EPE 150 ppm | SPS 4 ppm; and EPE 150 ppm |
| | SPS 4 ppm; and EPE 150 ppm | SPS 4 ppm; and EPE 150 ppm | SPS 4 ppm; and EPE 150 ppm | | |
| Electroplating condition | Current density: 15 ASD | Current density: 20 ASD | Current density: 15 ASD | Current density: 15 ASD | Current density: 20 ASD |
| | Electroplating time: | Electroplating time: | Electroplating time: | Electroplating time: | Electroplating time: |
| | 16 min | 12 min | 16 min | 16 min | 12 min |
| Single copper pillar morphology | Copper pillar uniformity -1.7% | Copper pillar uniformity -3.1% | Copper pillar uniformity -2.5% | Copper pillar surface roughness 20.7% | Copper pillar surface roughness 25.6%, and severe tilt |
| Copper pillar array coplanarity | 5.2% | 6.2% | 5.8% | 35.8% | 40.1% |

Data related to "copper pillar uniformity" in Table 1 refers to a value obtained by dividing a difference between a height in the middle of a copper pillar and a height of a shoulder of the copper pillar by the height of the shoulder of the copper pillar.

Data related to "surface roughness" in Table 1 refers to surface smoothness of the copper pillar.

Data related to "copper cylinder array coplanarity" in Table 1 refers to a value obtained after a difference between a height of a highest copper pillar and a height of a lowest copper pillar in an electroplating area is divided by an average height of copper pillars in the area and then divided by 2.

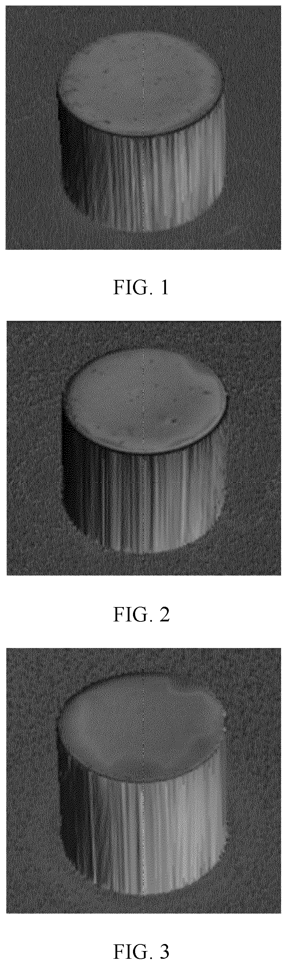

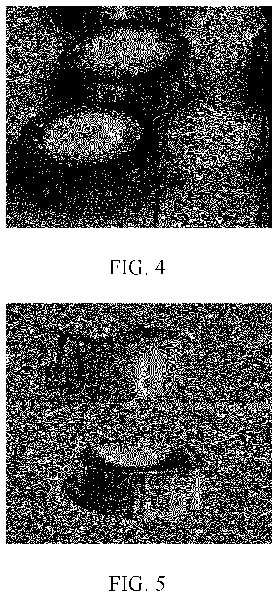

For a morphology structure of the copper pillar obtained through Test Case 1, refer to FIG. 1. For a morphology structure of the copper pillar obtained through Test Case 2, refer to FIG. 2. For a morphology structure of the copper pillar obtained through Test Case 3, refer to FIG. 3. For a morphology structure of the copper pillar obtained through Comparative Example 1, refer to FIG. 4. For a morphology structure of the copper pillar obtained through Comparative Example 2, refer to FIG. 5.

It may be learned from copper plating results in FIG. 1 to FIG. 3 and Table 1 that the electroplating solution provided in Test Case 1 to Test Case 3 can obtain a high-coplanarity copper pillar at a current density of up to 15 A/dm² or even up to 20 A/dm². With reference to FIG. 4 and FIG. 5, compared with Comparative Example 1 and Comparative Example 2, this embodiment of this disclosure can significantly improve single copper pillar uniformity and copper pillar array coplanarity by adding the leveling agent to the electroplating solution. This confirms that the electroplating solution provided in this embodiment of this disclosure is conducive to obtaining a high-uniformity copper pillar at a high current density.

In addition, it may be seen from Table 1 that, when a deposition speed of the copper pillar is 4.4 microns/minute, the copper pillar uniformity can also be maintained within 5% (where a theoretical growth speed of the copper pillar is about 4.4 microns/minute when the current density is 20 ASD).

It should be noted that definition of FIG. 1, FIG. 2, and FIG. 3 may decrease due to document printing or scanning, and consequently, a difference between FIG. 1, FIG. 2, and FIG. 3 is not clear. However, it can still be seen that the copper pillars shown in FIG. 1, FIG. 2, and FIG. 3 are different in heights and diameters.

In addition, definition of laser confocal microscope diagrams shown in FIG. 1, FIG. 2, and FIG. 3 may decrease due to document printing or scanning, and consequently, effect of this solution may not be clearly seen from the accompanying drawings of the document in some cases. However, an essence of this solution lies in improving copper pillar uniformity and copper pillar array coplanarity by using a specific leveling agent. Therefore, regardless of whether the laser confocal microscope diagrams of the copper pillars shown in FIG. 1, FIG. 2, and FIG. 3 are provided in embodiments of this application, the foregoing technical effects can be obtained through analysis based on the technical solutions in embodiments of this application.

The foregoing descriptions are merely intended to help a person skilled in the art understand the technical solutions of the present disclosure, and are not intended to limit the present disclosure. Any modification, equivalent replacement, or improvement made without departing from the spirit and principle of the present disclosure shall fall within the protection scope of the present disclosure.

## Claims

1. A polymer, wherein the polymer comprises a plurality of repeating units, and the repeating unit comprises: a binary epoxy compound residual group and a nitrogen-containing group;
the binary epoxy compound residual group is a residue formed after an epoxy bond of a binary epoxy compound is ring-opened; and
the nitrogen-containing group comprises: an alkyl group, and a dimethylamine group and a nitrogen-containing heterocyclic group that are respectively connected to two ends of the alkyl group, wherein the dimethylamine group is further connected to the binary epoxy compound residual group through a single bond.

2. The polymer according to claim 1, wherein a quantity of carbon atoms of the alkyl group ranges from 1 to 5.

3. The polymer according to claim 1, wherein the nitrogen-containing heterocyclic group is a morpholine group or a pyrrole group.

4. The polymer according to claim 1, wherein a chemical structural formula of the nitrogen-containing group comprises: 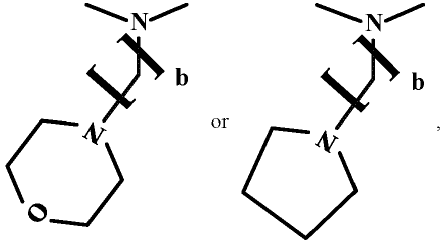 wherein
b is an integer, and 1 ≤ b ≤ 5.

5. The polymer according to any one of claims 1 to 4, wherein the binary epoxy compound residual group comprises: a non-epoxy connection group, and two epoxy residues respectively connected to two ends of the non-epoxy connection group; and
the epoxy residue is a residue formed after an epoxy bond is ring-opened, and the epoxy residue is connected to the dimethylamine group.

6. The polymer according to claim 5, wherein a chemical structural formula of the binary epoxy compound residual group is one of the following chemical structural formulas: 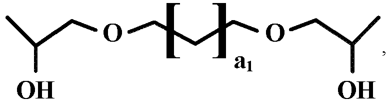 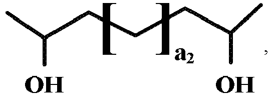 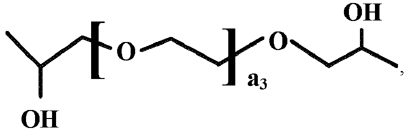 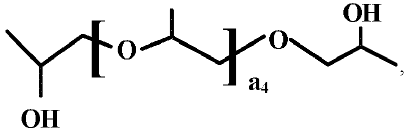 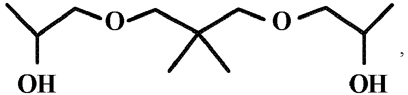 or 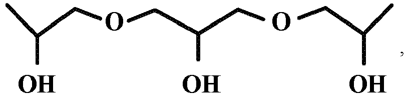 wherein
a₁, a₂, a₃, and a₄ are all integers, and each is an integer ranging from 0 to 8.

7. The polymer according to any one of claims 1 to 6, wherein a quantity of repeating units ranges from 3 to 100.

8. The polymer according to claim 7, wherein a chemical structural formula of the polymer is shown as follows: 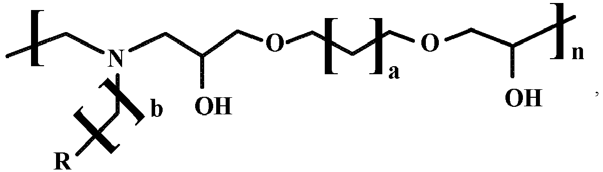 wherein 0 ≤ a ≤ 8, 1 ≤ b ≤ 5, 3 ≤ n ≤ 100, and a, b, and n are all integers; and

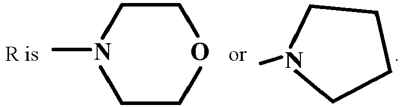

9. A polymer preparation method, wherein a polymer comprises a plurality of repeating units; the repeating unit comprises: a binary epoxy compound residual group and a nitrogen-containing group; and the nitrogen-containing group comprises: an alkyl group, and a dimethylamine group and a nitrogen-containing heterocyclic group that are respectively connected to two ends of the alkyl group, wherein the dimethylamine group is further connected to the binary epoxy compound residual group through a single bond;
the polymer preparation method comprises: performing a polymerization reaction on a binary epoxy compound and a nitrogen-containing compound in a solvent to obtain the polymer, wherein
a residue formed after an epoxy bond of the binary epoxy compound is ring-opened is used as the binary epoxy compound residual group; and
the nitrogen-containing compound comprises: an alkyl group, and an amine group and a nitrogen-containing heterocyclic group that are respectively connected to two ends of the alkyl group, wherein a residue formed after the amine group of the nitrogen-containing compound participates in the polymerization reaction is used as the nitrogen-containing group.

10. The polymer preparation method according to claim 9, wherein a quantity of carbon atoms of the alkyl group ranges from 1 to 5.

11. The polymer preparation method according to claim 9, wherein the nitrogen-containing heterocyclic group is a morpholine group or a pyrrole group.

12. The polymer preparation method according to claim 9, wherein a chemical structural formula of the nitrogen-containing compound comprises: 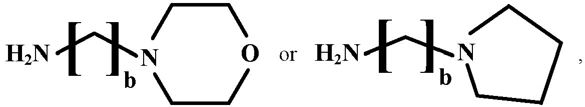 wherein
b is an integer, and 1 ≤ b ≤ 5.

13. The polymer preparation method according to any one of claims 9 to 12, wherein the binary epoxy compound comprises: a non-epoxy connection group, and two epoxy groups respectively connected to two ends of the non-epoxy connection group.

14. The polymer preparation method according to claim 13, wherein a chemical structural formula of the binary epoxy compound is one of the following chemical structural formulas: 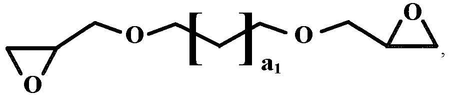 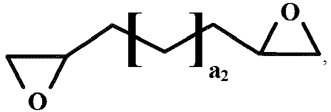 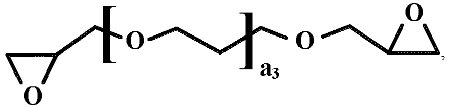 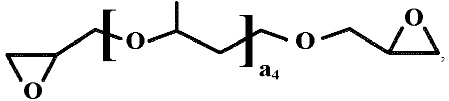 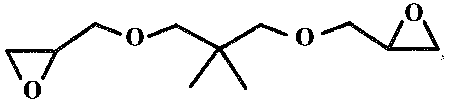 or 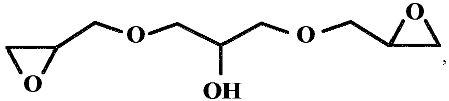 wherein
a₁, a₂, a₃, and a₄ are all integers, and each is an integer ranging from 0 to 8.

15. The polymer preparation method according to any one of claims 9 to 14, wherein a reaction temperature of the polymerization reaction ranges from 60°C to 75°C.

16. The polymer preparation method according to any one of claims 9 to 15, wherein the solvent comprises at least one of ethanol, methanol, and water.

17. Application of the polymer according to any one of claims 1 to 8 in preparation of a leveling agent.

18. A leveling agent, wherein the leveling agent comprises the polymer according to any one of claims 1 to 8.

19. The leveling agent according to claim 18, wherein a chemical structural formula of the polymer is shown as follows: 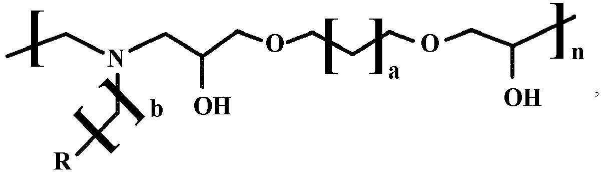 wherein 2 ≤ a ≤ 4, 2 ≤ b ≤ 3, and 5 ≤ n ≤ 40; and

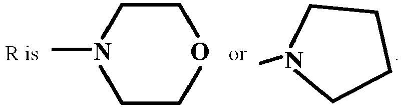

20. A leveling agent preparation method, wherein the leveling agent preparation method is the same as the polymer preparation method according to any one of claims 9 to 16.

21. An electroplating solution, wherein the electroplating solution comprises the leveling agent according to claim 18 or 19.

22. The electroplating solution according to claim 21, wherein the electroplating solution further comprises: a metal salt, an acid solution, a water-soluble chloride, an accelerator, and an inhibitor, wherein
a concentration of the metal salt in the electroplating solution ranges from 5 g/L to 300 g/L;
a concentration of the acid solution in the electroplating solution ranges from 10 g/L to 300 g/L;
a concentration of chloride ions in the water-soluble chloride in the electroplating solution ranges from 1 ppm to 100 ppm;
a concentration of the leveling agent in the electroplating solution ranges from 0.01 ppm to 1000 ppm;
a concentration of the accelerator in the electroplating solution ranges from 0.01 ppm to 100 ppm; and
a concentration of the inhibitor in the electroplating solution ranges from 1 ppm to 2000 ppm.

23. The electroplating solution according to claim 22, wherein the metal salt comprises at least one of copper sulfate, copper cyanide, and copper pyrophosphate;
the acid solution comprises at least one of sulfuric acid, hydrochloric acid, and organic acid; and
the water-soluble chloride comprises at least one of hydrochloric acid, sodium chloride, potassium chloride, and ammonium chloride.

24. The electroplating solution according to claim 22 or 23, wherein the accelerator comprises at least one of sodium polydisulfide dipropane sulfonate and sodium 3-mercapto-1-propane sulfonate; and
the inhibitor comprises at least one of polyethylene glycol, polypropylene glycol, PEO-PPO-PEO block copolymer, and PPO-PEO-PPO block copolymer.

25. A method for electroplating a to-be-plated part, wherein the method comprises: using the electroplating solution according to any one of claims 21 to 24.

26. The method for electroplating a to-be-plated part according to claim 25, wherein the method comprises: performing electroplating at a current density greater than or equal to 5 ASD.

27. The method for electroplating a to-be-plated part according to claim 26, wherein the method comprises: performing electroplating at a current density greater than or equal to 15 ASD.
